# EUROPÄISCHE PATENTANMELDUNG

(11) **EP 0 577 031 A1**
(43) Veröffentlichungstag der Anmeldung: **05.01.1994**
(21) Anmeldenummer: 93110228.9
(22) Anmeldetag: 26.06.1993
(51) Int. Cl.: C02F 1/32, C02F 1/78

(54) **Verfahren zur Begasung und Entkeimung und Vorrichtung zur simultanen Durchführung**

(30) Priorität: 02.07.1992 DE 4221774
(71) Anmelder: Solvay Umweltchemie GmbH, D-30173 Hannover (DE)
(72) Erfinder: Sell, Michael, D-3150 Peine (DE); Mann, Andreas, D-3000 Hannover 1 (DE)
(74) Vertreter: Lauer, Dieter, Dr.

(57) **Zusammenfassung**

Beschrieben wird ein Verfahren zur Entkeimung und Begasung wäßriger Flüssigkeiten mit verbesserter Wirksamkeit. Beschrieben wird weiterhin eine Vorrichtung zur simultanen Entkeimung und Begasung von Flüssigkeiten.

## Beschreibung

Die Erfindung bezieht sich auf ein verfahren zur Entkeimung von wäßrigen, einer Begasung zu unterwerfenden Flüssigkeiten unter Verwendung von entkeimender Strahlung, insbesondere UV-Strahlung.

Flüssigkeiten, insbesondere wäßrige Flüssigkeiten, besonders aus natürlichen Quellen (z.B. Grundwasser, Quellwasser oder Flußwasser) enthalten häufig Keime, deren Vorhandensein oder gar Vermehrung aus hygienischen Gründen unerwünscht ist.

Die notwendige Entkeimung kann durch Zusatz chemischer Mittel, z.B. Hydrazin, Chlor oder Chlordioxid vorgenommen werden. Die Verwendung solcher Mittel kommt ihrer Toxizität und der möglichen Bildung chlorierter Verbindungen wegen aus gesundheitlichen Gründen in vielen Fällen nicht in Frage.

Eine andere Methode zur Entkeimung stellt die entkeimende Bestrahlung, insbesondere mit UV-Licht dar. In einem Verfahren zur katalytischen Entfernung des Nitrit- und/oder Nitratgehaltes in Wasser, welches die EP-A 359 074 beschreibt, kommt eine solche Art der Entkeimung zur Anwendung.

Bei diesem Verfahren soll insbesondere Grundwasser, Flußwasser und Quellwasser durch Entfernung des üblicherweise darin enthaltenen Nitrits bzw. Nitrats aufbereitet werden. Dabei wird das zu behandelnde Wasser zur Entkeimung zunächst durch einen Behälter geleitet, in welchem es mit UV-Licht bestrahlt wird. Danach wird es mit Wasserstoff begast und das begaste Wasser über einen Platingruppenmetall-haltigen Katalysator geleitet, wobei Nitrit bzw. Nitrat durch Umsetzung mit dem im Wasser gelösten Wasserstoff zu Stickstoff und Wasser abgebaut wird. Trotz der vor der Begasung durchgeführten entkeimenden Behandlung wurde eine zunehmende Verkeimung der Apparaturen und des Katalysatorsystems beobachtet.

Aufgabe der vorliegenden Erfindung ist es, ein Verfahren anzugeben, welches die Nachteile des bekannten Verfahrens überwindet. Diese Aufgabe wird durch das erfindungsgemäße Verfahren gelöst.

Das erfindungsgemäße Verfahren zur Entkeimung von wäßrigen, einer Begasung zu unterwerfenden Flüssigkeiten unter Verwendung von entkeimender Strahlung, insbesondere UV-Strahlung ist dadurch gekennzeichnet, daß man die entkeimende Bestrahlung nach der Begasung durchführt oder daß man Begasung und entkeimende Bestrahlung simultan durchführt.

Das erfindungsgemäße Verfahren kann unter Verwendung von beliebiger entkeimender Strahlung durchgeführt werden. Besonders bevorzugt verwendet man UV-Strahlung. Man kann z. B. Quecksilberniederdruckstrahler oder -hochdruckstrahler einsetzen. Besonders wirksam sind solche Strahler mit einer Abstrahlung im Wellenlängenbereich von 180 bis 300 nm.

Gemäß einer bevorzugten Ausführungsform führt man Begasung und entkeimende Bestrahlung simultan durch. Dies ist technisch besonders vorteilhaft, da es zeit- und platzsparend durchzuführen ist.

Das erfindungsgemäße Verfahren kann im Rahmen verschiedener Begasungsverfahren eingesetzt werden, beispielsweise bei der Begassung von Wasser mit Ozon zum Zwecke der Sterilisation, beim Versetzen von Wässern mit Kohlendioxid oder beim Begasen von wäßrigen Flüssigkeiten mit Wasserstoff. Die Begasung wäßriger Flüssigkeiten mit Wasserstoff kann verschiedenen Zwecken dienen. Zum einen kann man Sauerstoff durch Umsetzung mit dem gelösten Wasserstoff katalytisch entfernen. Die sauerstoffarmen bzw. sauerstofffreien Wässer sind für die Lebensmittelindustrie verwendbar. Sauerstoffarme oder sauerstofffreie wäßrige Flüssigkeiten sind aufgrund ihrer verringerten Korrosivität auch sehr gut als Prozeßflüssigkeiten, beispielsweise Kühlflüssigkeiten in technischen Apparaturen verwendbar.

Weiterhin kann man auch unerwünschte reduzierbare Bestandteile, z.B. Nitrit und/oder Nitrat, in Anwesenheit von Wasserstoff in der wäßrigen Flüssigkeit eliminieren. Dies kann durch biologische Verfahren erfolgen. Das erfindungsgemäße Verfahren verhindert dann die Verunreinigung der verwendeten Bakterienflora durch unerwünschte Fremdkeime.

Die Entfernung von Nitrit und/oder Nitrat kann auch durch katalytische Verfahren bewirkt werden. Das erfindungsgemäße Verfahren verhindert wirkungsvoll die Verkeimung von Apparaturen und Katalysatoren.

Im folgenden wird eine Vorrichtung beschrieben, die ebenfalls zur Erfindung gehört und sich zur simultanen Begasung und Entkeimung wäßriger Flüssigkeiten eignet. Diese Vorrichtung umfaßt einen Behälter zur Aufnahme der Flüssigkeit, Einlaß und Auslaß für die Flüssigkeit, Einlaß und gegebenenfalls Auslaß für das Gas sowie eine oder mehrere entkeimend wirkende Strahlungsquellen, vorzugsweise eine oder mehrere UV-Lichtquellen.

Bei Gasen mit guter Löslichkeit der zu begasenden wäßrigen Flüssigkeit kann es ausreichen, das Gas durch die Flüssigkeit perlen zu lassen. Es ist von Vorteil, in der Vorrichtung Mittel vorzusehen, mit welchen das Gas in feiner Verteilung mit der wäßrigen Flüssigkeit kontaktiert werden kann. Beispielsweise kann man die zu begasende Flüssigkeit wie Grundwasser, Quellwasser oder Flußwasser, zusammen mit dem Gas, beispielsweise Wasserstoff, über eine Düsenplatte geben und so eine gute Lösung des Gases in der Flüssigkeit erreichen. Dabei wird ein Gaspolster aufgebaut, durch das das Wasser hindurchtritt und sich dabei mit dem Gas anreichert bzw. sättigt.

Vorteilhaft ist es, Behälter mit Strahlung reflektierender, vorzugsweise polierter oder verspiegelter Innenfläche vorzusehen, da dann die Strahlungsquelle besonders gut ausgenutzt werden kann.

Behälterformen, die eine längere Bestrahlung ermöglichen, beispelsweise in Strömungsrichtung der Flüssigkeit langgestreckte Behälter, mit Strahlungsquellen, die ebenfalls zweck-mäßig in Strömungsrichtung langgestreckt sind, sind bevorzugt. Sehr zweckmäßig sind eine oder mehrere stabförmige UV-Lichtquellen, die in Strömungsrichtung in einem langgestreckten Behälter angeordnet sind. Bei nur einer Lichtquelle ist diese vorteilhaft zentriert (mittig) im Behälter entlang der Längsachse positioniert. Gewünschtenfalls kann man auch zwei stabförmige UV-Lampen im Behälter längs zur Strömungsrichtung nacheinander anordnen. Dies hat den Vorteil, daß man gezielt flüssige Phase und eine sich gegebenenfalls bildende Schaum/Gas-Phase unabhängig voneinander bestrahlen kann.

Zweckmäßig sieht man eine Niveau-Regelung der Phasengrenze flüssige Phase-Schaum/Gas-Phase vor. Dies kann beispielsweise durch Schwimmerkontakte oder Ultraschall-Quellen erfolgen.

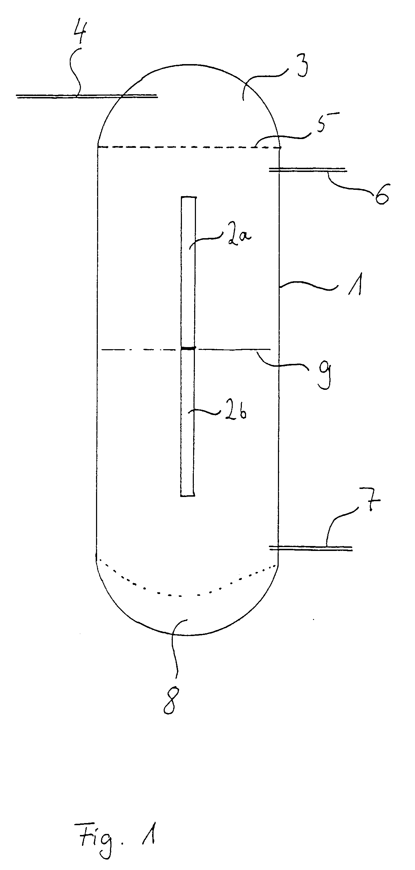

Das Verfahren wird anhand der Verwendung einer bevorzugten Ausführungsform der Vorrichtung, wie in Figur 1 angegeben, weiter erläutert.

Die Vorrichtung weist einen langgestreckten Behälter 1 aus druckfestem Material (ggf. rostfreiem Stahl) auf. Zwei stabförmige UV-Strahler 2a und 2b sind aufeinanderfolgend entlang der Mittelachse des Behälters 1 angeordnet. Ein Behälterkopf 3, der mit dem Behälter 1 druckdicht verbunden werden kann, weist eine Zuleitung 4 für die wäßrige Flüssigkeit auf. Zwischen Behälterkopf 3 und Behälter 1 ist ein Siebboden 5 angeordnet. Direkt unterhalb des Siebbodens 5 ist eine Gaszuleitung 6. Die begaste Flüssigkeit kann durch einen Auslaß 7 aus den Behälter abgelassen werden. Den Abschluß des Behälters 1 bewirkt ein unterhalbe des Auslasses 7 angeordneter Behälterboden 8. Einrichtungen, die den Explosionsschutz des Behälters sowie die Einregulierung der Phasengrenze Flüssigkeit-Schaum/Gas bewirken, sowie Stromkabel für die Strahler sind nicht eingezeichnet.

Das Verfahren wird anhand einer konkreten Ausführungsform, der Nitratreduktion von Brunnenwasser, weiter beschrieben. Das zu begasende Brunnenwasser wird unter Vordruck durch die Leitung 4 in den Behälter eingeleitet. Über eine Leitung 6 wird Wasserstoff zugeführt. Bei der Vermischung mit dem Wasser bildet sich im Behälter ein Wasserstoff-Gaspolster aus. Das in den Behälter geleitete Wasser wird über eine Düsenplatte (Siebboden) 5 versprüht und gelangt sehr fein verteilt in den Gasraum im Innern des Behälters. Dabei sättigt sich das Wasser mit Wasserstoff. Unterhalb der Phasengrenze Gas/Flüssigkeit liegt eine wasserstoffhaltige oder mit Wasserstoff gesättigte wäßrige Phase vor. Die Menge an zugeführtem bzw. abgeführtem Wasser wird so eingeregelt, daß die Phasengrenze Flüssigkeit-Schaum/Gas etwa in Höhe des Verbindungspunktes der beiden verwendeten UV-Strahler 2a und 2b liegt, d.h. in etwa der in Figur 1 eingezeichneten Linie 9 entspricht. Die beiden UV-Strahler können getrennt voneinander an- bzw. abgeschaltet werden. Sie werden durch das vorbeiströmende Wasser gekühlt.

Das mit Wasserstoff begaste, vorzugweise gesättigte Grundwasser wurde dann durch eine Katalysatorschüttung geleitet, in welcher entsprechend der Lehre der EP-A 359 074 Nitrit und Nitrat durch Umsetzung mit Wasserstoff zu Stickstoff und Wasser entfernt werden konnten.

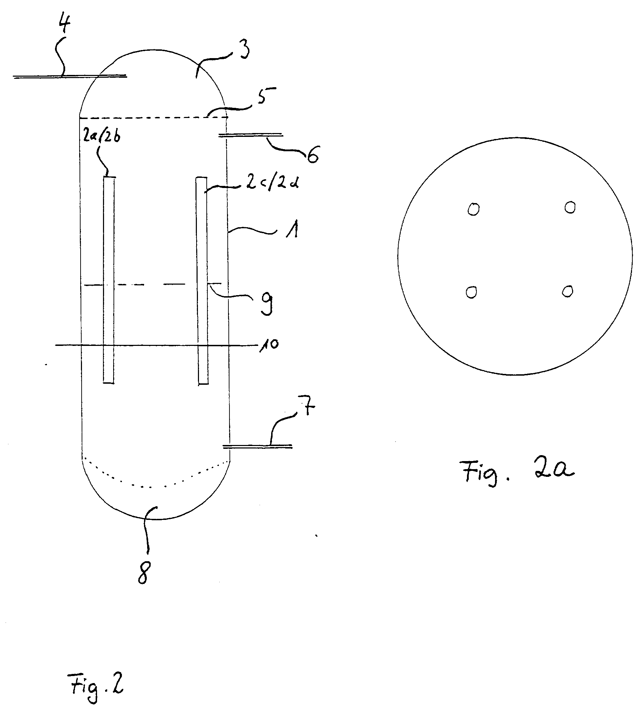

Eine alternative Ausführungsform der Vorrichtung weist mehrere, z. B. 4, Strahlungsquellen auf, die nebeneinander entlang der Strömungsrichtung angeordnet sind. Figur 2 zeigt eine Seitenansicht, Figur 2a einen Schnitt entlang der Fläche 10. Die Bezugszeichen 2a, 2b, 2c und 2d beziehen sich auf vier stabförmige UV-Strahler.

Die vorstehenden Beispiele für Anwendungsverfahren bzw. Vorrichtungen sollen die Erfindung nicht einschränken. Abwandlungen, beispielsweise Variationen des Behälters, der Strahlungsquelle der zu begasenden Flüssigkeit oder des verwendeten Gases liegen im Belieben des Fachmannes. Beispielsweise kann das Verfahren auch zur Begasung von Wasser mit Ozon zum Zwecke der Sterilisation oder Zersetzung kontaminieren, da Stoffe, beispielsweise von Kohlenwasserstoffen, zur Begasung von Wasser mit Sauerstoff mit dem Ziel der Anreicherung an Sauerstoff oder dem oxidativen Abbau kontaminierender Materialien, oder anderen oxidativen bzw. reduktiven Verfahren innerhalb der Wasseraufbereitung bzw. Abwasserreinigung angewendet werden. Ein weiterer Anwendungsbereich liegt in der Begasung mit Inertgasen wie z.B. Stickstoff, um andere in der wäßrigen Flüssigkeit gelöste unerwünschte Gase auszutreiben.

## Patentansprüche

1. Verfahren zur Entkeimung von wäßrigen, einer Begasung zu unterwerfenden Flüssigkeiten unter Verwendung von entkeimender Strahlung, insbesondere UV-Strahlung, dadurch gekennzeichnet, daß man die entkeimende Bestrahlung nach der Begasung durchführt oder daß man Begasung und entkeimende Bestrahlung simultan durchführt.

2. Verfahren nach Anspruch 1, dadurch gekennzeichnet, daß man die Flüssigkeit einer Begasung mit Wasserstoff oder Ozon unterwirft.

3. Verfahren nach Anspruch 1 oder 2, dadurch gekennzeichnet, daß man als entkeimende Bestrahlung eine UV-Strahlung vorsieht, vorzugsweise UV-Strahlung einer Wellenlänge von 180 nm bis 300 nm.

4. Verfahren nach einem der vorhergehenden Ansprüche, dadurch gekennzeichnet, daß man Begasung und entkeimende Bestrahlung simultan durchführt.

5. Verfahren nach einem der vorhergehenden Ansprüche, dadurch gekennzeichnet, daß man die Flüssigkeit einer Begasung mit Wasserstoff unterwirft und das Verfahren im Rahmen der katalytischen Entfernung von Sauerstoff, Nitrit und/oder Nitrat durchgeführt wird.

6. Vorrichtung zur simultanen Begasung und entkeimenden Bestrahlung einer Flüssigkeit, umfassend einen verschließbaren Behälter zur Aufnahme der Flüssigkeit, Einlaß und Auslaß für die Flüssigkeit, Einlaß und gegebenenfalls Auslaß für das Gas und eine oder mehrere entkeimende Strahlungsquellen, vorzugsweise eine oder mehrere UV-Lichtquellen.

7. Vorrichtung nach Anspruch 6, dadurch gekennzeichnet, daß sie weiterhin Mittel zur Verteilung des Gases in der Flüssigkeit umfaßt.

8. Vorrichtung nach Anspruch 6 oder 7, dadurch gekennzeichnet, daß die Innenfläche des Behälters Strahlung reflektierende Eigenschaften aufweist, vorzugsweise poliert und/oder verspiegelt ist.

9. Vorrichtung nach Anspruch 5 bis 7, dadurch gekennzeichnet, daß als UV-Lichtquelle eine oder mehrere stabförmige UV-Lichtquellen vorgesehen sind.

10. Vorrichtung nach Anspruch 9, dadurch gekennzeichnet, daß die stabförmige UV-Lichtquelle zwei stabförmige UV-Strahler, die nacheinander entlang der Strömungsrichtung angeordnet sind, umfaßt.

11. Vorrichtung nach Anspruch 9, dadurch gekennzeichnet, daß zwei oder mehrere stabförmige UV-Strahler nebeneinander entlang der Strömungsrichtung angeordnet sind.

12. Vorrichtung nach einem der Ansprüche 6 bis 10, dadurch gekennzeichnet, daß die Strahlungsquelle mittig im Behälter entlang der Strömungsrichtung angeordnet ist.

13. Vorrichtung nach einem der Ansprüche 6 bis 12, dadurch gekennzeichnet, daß Mittel zur Einstellung der Phasengranze Flüssigkeit-Gas vorgesehen sind
